Europäisches Patentamt

European Patent Office

Office européen des brevets

(19)

(11) Publication number: **0 360 588 B1**

## EUROPEAN PATENT SPECIFICATION

(12)

(45) Date of publication of patent specification: **11.08.93**   (51) Int. Cl.⁵: **B60C 9/20**, B60C 9/00

(21) Application number: **89309572.9**

(22) Date of filing: **20.09.89**

(54) Radial Tyre for motor cycle.

(30) Priority: **22.09.88 JP 238517/88**

(43) Date of publication of application:
**28.03.90 Bulletin 90/13**

(45) Publication of the grant of the patent:
**11.08.93 Bulletin 93/32**

(84) Designated Contracting States:
**DE FR IT**

(56) References cited:
**GB-A- 2 003 525**
**US-A- 4 234 030**
**US-A- 4 262 726**

**PATENT ABSTRACTS OF JAPAN vol. 10, no. 238 (M-508)(2294) 16 August 1986, & JP-A-61 71204 (BRIDGESTONE CORPORATION) 12 April 1986,**

(73) Proprietor: **SUMITOMO RUBBER INDUSTRIES, CO. LTD**
**No. 1-1, Tsutsui-cho 1-chome**
**Chuo-ku Kobe-shi Hyogo-ken 651(JP)**

(72) Inventor: **Shirasyoji, Hisashi**
**2-6-2 Tsutsuijigaoka Tarumi-ku**
**Kobe-shi Hyogo-ken(JP)**

(74) Representative: **Stewart, Charles Geoffrey**
**SP TYRES UK LIMITED Tyre Technical Division**
**Fort Dunlop, Erdington, Birmingham B24 9OT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a radial tyre suitable for use on motor cycles.

In recent years, with the improvements of the highway networks and the resultant higher vehicle speeds, radial tyres have become necessary for motor cycles.

As a belt layer for said radial tyre, belt cords composed of twisted filaments of single materials such as nylon, aromatic polyamide, steel or the like are employed.

On the other hand the performance characteristics of radial tyres, for example their resistance to belt edge looseness (hereinafter referred to as "BEL resistance"), steering stability, wear resistance, high speed durability and the like, are known to depend on the physical properties of the belt cords and in particular on the elongation and tensile modulus. Accordingly, for tyre applications it is very important to correctly select the physical properties of the belt cords and their constituent materials.

The physical properties of the conventional belt cords comprising single materials are substantially determined by the kind of fibrous materials used for the belt cord, and its physical properties often show a wide variation of values due to the material used. As a result, the freedom for tyre design is low, and it has been difficult to provide a tyre having improved overall properties.

When organic fibre cord having a high medium elongation and a low modulus of elasticity such as nylon cord is used, the stress concentration on both belt ply edges caused by the repeated deformation during running and the tyre engaging and dis-engaging from the ground can be relaxed by the extension of the belt cords so as to effectively prevent the aforesaid belt edge from separation when done together with an improved adhesion between the rubber compound and the belt cords.

However, such nylon cords are inferior in hoop effect since the medium elongation is too high. As a result there are difficulties with steering stability and wear resistance which reduce the advantages of the radial tyre construction and the high speed durability is markedly reduced because of the increased internal temperature caused by the growth of tyre diameter as a result of high speed running of the tyre.

Organic fibre cords having a low medium elongation and high modulus of elasticity such as aromatic polyamide and the like have an improved hoop effect to increase steering stability, wear resistance and high speed durability but the aforesaid stress caused by the repeated deformations of the tyre is concentrated or focussed at both belt ply edges. Further in co-operation with the stress difference of said both edges and poor adhesion between the rubber compound and the cords, separation at belt ply edges is apt to be caused.

Inorganic fibre cords having a very high modulus like steel cords are prone to accelerate the aforesaid belt ply edge separation and to increase the rigidity of tread region excessively. Wear resistance is improved but there are problems in that steering stability, ride feel and high speed durability are decreased.

A tyre showing the features of the preamble of claim 1 is known, e.g. from US-A-4 262 726.

It is an object of the present invention to provide a radial tyre for motorcycles which can at the same time provide improved tyre performance including BEL resistance, steering stability, wear resistance, high speed durability and the like.

According to the present invention, a radial tyre for a motorcycle comprises a carcass of at least one carcass ply each having reinforcement cords at an angle of 75 degrees to 90 degrees with respect to the circumferential direction of the tyre, and a belt layer superimposed on said carcass comprising of a plurality of belt plies each comprising parallel cords laid at an angle less than 30 degrees with respect to the circumferential direction of the tyre characterised in that the belt cords have a medium elongation of 3 to 8% under a load of 6.8 kg and comprise a twisted assembly of high modulus fibres having an initial modulus of 4000 to 5000 $Kg/mm^2$ and low modulus fibres having an initial modulus of 200 to 400 $Kg/mm^2$.

Belt cords formed by twisting such high modulus fibres and low modulus fibres together can relax the stress concentration at the belt ply edges, and further can effectively prevent belt edge separation due to the mixed low modulus fibres having improved adhesion. Furthermore, in use the aforesaid tyre of the invention can maintain the same steering stability, wear resistance and high speed durability as a tyre comprising a belt layer composed of high modulus fibre cords only, so that the overall tyre performance, which was difficult to achieve by a tyre comprising a belt layer composed of conventional fibre materials, is improved.

An embodiment of the present invention will now be described by way of example, referring to the drawings, in which:

Figure 1 is a half sectional view showing a radial tyre of a motorcycle;

Figure 2 is a side view showing a belt cord.

In the drawings, a tyre 1 has a tread 2, sidewalls 3 extending radially inwardly from both ends of the tread 2, bead regions 4 positioned at the radially inward ends of the sidewalls 3, and a toroidal carcass 6

EP 0 360 588 B1

wrapped at each edge around bead cores 5 in the bead reions 4. A belt layer 7 is arranged radially outside the carcass 6. The tread 2 is sharply convex and has a width which is larger than the width of the main carcass measured at the widest point of the sidewalls 3. This allows the camber thrust generated when the tyre is tilted to be taken by the tyre even when steeply banked over.

The carcass 6 is composed of two piles 6A,6B each formed of carcass cords laid at an angle 75 degrees to 90 degrees with respect to the equator of the tyre. Both edges of each ply 6A,6B are folded from the inside to the outside around the bead core 5 and terminate in the sidewall 3. The end 6a of the folded edge portion of the carcass ply 6A which lies outside the bead region 4 extends to a higher position than the end 6b of the folded edge portion of the carcass ply 6B which lies inside in the bead region 4, so that the aforesaid end 6b of the folded edge portion is completely covered. This mitigates the stress concentrations at the edge portion.

Further, to reinforce the sidewall so as to increase the lateral rigidity of the radial construction, the ply turn up heights Hb and Ha measured from the bead base to each of the folded ply edges, that is the inner edge 6a and the outer edge 6b, respectively are within the ranges of 15 to 30% and 20 to 40% respectively of the section height H. Further, by providing upon the bead cores 5 a triangular bead apex 10 made of hard rubber extending from the bead core 5 into the sidewall together with the sidewall 3 being made of hard rubber, the transvers stiffness of the tyre is increased.

For the carcass cords organic fibre cords such as rayon, polyester and the like having an initial modulus of less than 1500 kgf/mm$^2$ are employed. More preferably nylon cords having an initial modulus of less than 400 kgf/mm$^2$ are used. In this case, for example, the tyre fabric comprises parallel nylon cords of 1000 to 2000 denier embedded at a density ranging from 35 to 60 cords/5cm in rubber whose 300% modulus ranges from 80 to 230 kgf/cm$^2$.

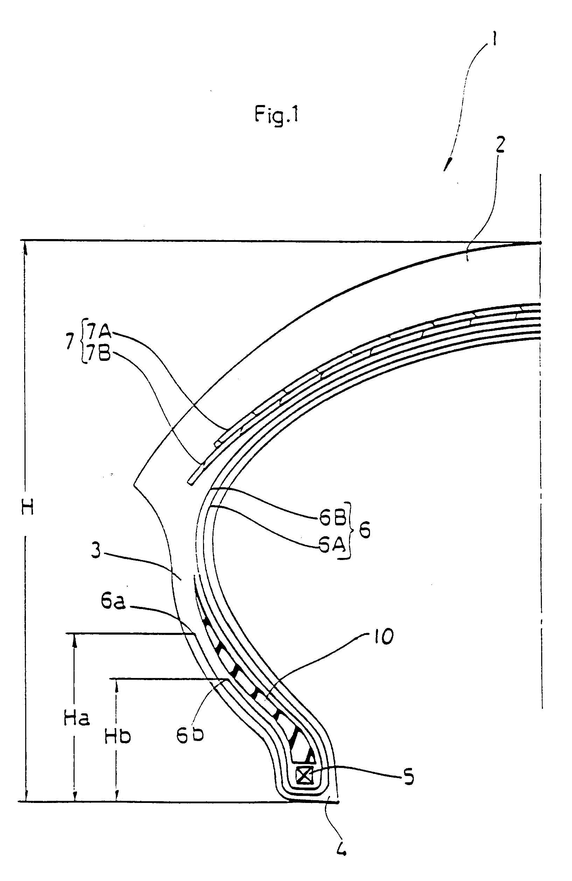

At least one ply is used for the carcass, and, as an alternative to the structure in which the carcass is folded from the inside to the outside around the bead core 5 as shown in Figure 1, a construction in which the carcass is folded from the outside to the inside or a construction in which the former two are combined may be used.

The structure shown in the drawings is, however, the preferred optimum construction wherein the carcass is folded from the inside to the outside.

The belt layer 7, in the present embodiment is composed of parallel belt cords 9 arranged at an angle of less than 30 degrees with respect to the circumferential direction of the tyre. The belt layer 7 is arranged to cover substantially the full width of the tread 2 and is composed of two cut edge belt plies 7a,7b radially outside the carcass 6. The cords of the two belt plies 7a,7b are crossed with each other.

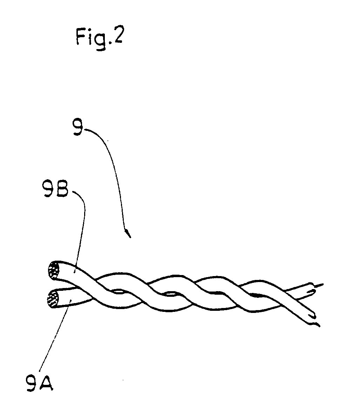

The aforesaid belt cords, as shown in Figure 2, are textile cables 9 comprising a plurality of yarns 9A and 9B. Yarn 9A is a high modulus fibre having an initial modulus of 4000 to 5000 kgf/mm$^2$, for example an aromatic polyamide fibre, and yarn 9B is a low modulus fibre having an initial modulus of 200 to 400 kgf/mm$^2$, for example nylon fibre. The yarns (9A and 9B) are twisted together with one another to form the cable 9 having a medium elongation of 3 to 8%, the term "medium elongation" used herein means the elongation measured when applying a 6.8 kg load to the cord. The aforesaid aromatic polyamide fibre has a low medium elongation of less than 2% and the aforesaid nylon fibre has relatively high medium elongation of more than 13%, so that by selecting the number of filaments and the ratio of the cross sectional areas of each fibre yarn 9A, 9B per cord the medium elongation is set in the aforesaid range.

If the medium elongation is made less than 3%, the effect which mitigates the stress concentration on both belt ply edges becomes poor, therefore the resistance to belt edge looseness is reduced.

When it is over 8%, the hoop effect becomes insufficient, so that the tyre loses steering stability, wear resistance, high speed durability and the like.

The aforesaid fibre yarns 9A and 9B are preferably in the range of 1000 to 2000 denier, and preferably the primary twist per 1 cm is from 20 to 40 and the final twist is from 30 to 40.

Incidentally, the more twists that are used the lower the modulus of elasticity becomes which increases the elongtaion and thus allows the properties of the said belt cords to be modified.

The belt cords 9 are so formed as to have a medium elongation of 3 to 8% by twisting the high modulus fibre yarn 9A and the low modulus fibre yarn 9B together with each other, and has intermediate properties between the conventional cords made by twisting one or other of the same fibre yarns alone. Accordingly the steering stability, wear resistance and high speed durability which conventional belt cords composed of high modulus fibre 9A impart to tyres are almost maintained while also separation of plies at both edges of belt layer is effectively prevented.

A specific series of examples will now be compared.

Motor cycle tyres were made of the size 150/60R18 with the structure as shown in Figure 1. As controls, radial tyres having conventional structure and materials were used. Detailed specifications of these

3

tyres are shown in Table 1. The resistance to belt edge looseness, growth of tyre diameter and high speed durability were evaluated by drum tester.

The tests were performed according to the test procedure specified by the JATMA safety standard.

TABLE 1

| | | embodiment 1 | embodiment 2 | conventional tyre 1 | conventional tyre 2 |
|---|---|---|---|---|---|
| carcass construction | number of plies | 1 | 2 | 2 | 1 |
| | cord angle | 90° | 88° | 88° | 90° |
| | cord material | 1260d/2(nylon) | 1260d/2(nylon) | 1260d/2(nylon) | 1260d/2(nylon) |
| belt construction | number of plies | 2 | 2 | 2 | 2 |
| | cord angle | 17° | 17° | 17° | 17° |
| | cord material · aromatic polyamide / nylon | 1500d / 1260d | 1000d / 1260d | 1500d/2 | 1260d/2 |
| | twist · number of primary twist(T/cm) aromatic polyamide / nylon / · number of final twist(T/cm) | 36 / 24 / 36 | 36 / 36 / 36 | 34 — / 34 | 33 / 33 |
| medium elongation (at 6.8kg load) | | 4.6% | 5.3% | 0.6% | 9.8% |
| belt edge looseness *1 | | NO | NO | YES | NO |
| ratio of growth of tyre diameter | | 3.2% | 3.5% | 3.0% | 4.2% |
| high speed durability | | *2 | *3 | *4 | *5 |

*1: the occurrence of the belt edge looseness after 1000km running under the JATMA safety standard.
*2: tread was broken-down 2·minutes later at 280 km/h.
*3: tread was broken-down 10 minutes later at 270 km/h.
*4: tread was broken-down 5 minutes later at 280 km/h.
*5: tread was broken-down 8 minutes later at 250 km/h.

As is apparent from Table 1, embodiments 1 and 2 according to the present invention have intermediate properties between conventional tyres 1 and 2. As a result the weaknesses of the conventional tyres 1 and 2 were substantially improved to increase the overall performance of the tyre.

As above described, radial tyres for motor cycles according to the invention employ novel belt cords in which the medium elongation is set in a specific range by twisting high modulus fibre and low modulus fibre together, so that the weaknesses of each type of belt cord of each fibre material can be effectively improved to improve overall tyre performance.

**Claims**

1. A radial tyre for a motorcycle comprising a carcass (6) of at least one carcass ply (6A,6B) each having reinforcement cords at an angle of 75 degrees to 90 degrees with respect to the circumferential

4

EP 0 360 588 B1

direction of the tyre, and a belt layer (7) superimposed on said carcass (6) comprising of a plurality of belt plies (7A,7B) each comprising parallel cords (9) laid at an angle less than 30 degrees with respect to the circumferential direction of the tyre characterised in that the belt cords (9) have a medium elongation of 3 to 8% under a load of 6.8 kg and comprise a twisted assembly of high modulus fibres having an initial modulus of 4000 to 5000 kg/mm$^2$ and low modulus fibres having an initial modulus of 200 to 400 kg/mm$^2$.

2. A tyre according to claim 1 characterised in that the high modulus fibres have a low medium elongation of less than 2% and the low modulus fibres have a relatively high medium elongation of more than 13%.

3. A tyre according to claim 1 or 2 characterised in that the fibre yarns are in the range of 1000 to 2000 denier.

4. A tyre according to claim 1, 2 or 3 characterised in that primary twist of the yarns is 20-40 turns per cm and the final or last twist is 30-40 turns per cm.

5. A tyre according to claim 1, 2, 3 or 4 characterised in that the low modulus fibres are nylon fibres and the high modulus fibres are aromatic polyamide fibres.

**Patentansprüche**

1. Radialreifen für ein Motorrad, welcher eine Karkasse (6) aus mindestens einer Karkasslage (6A, 6B) umfaßt, die jeweils Verstärkungskorde mit einem Winkel von 75 bis 90°, bezogen auf die Umfangsrichtung des Reifens besitzt, und eine über die Karkasse (6) gelegte Gürtellage (7), die eine Vielzahl von Gürtelschichten (7A, 7B) umfaßt, welche jeweils parallele Korde (9) umfassen, die mit einem Winkel von weniger als 30°, bezogen auf die Umfangsrichtung des Reifens, gelegt sind, dadurch gekennzeichnet, daß die Gürtelkorde (9) eine mittlere Längung von 3 bis 8% unter einer Last von 6,8 kp aufweisen und eine verzwirnte Anordnung umfassen aus Hochmodulfasern mit einem Initialmodul von 4000 bis 5000 kp/mm$^2$ und Niedrigmodulfasern mit einem Initialmodul von 200 bis 400 kp/mm$^2$.

2. Reifen nach Anspruch 1, dadurch gekennzeichnet, daß die Hochmodulfasern eine niedrige mittlere Längung von weniger als 2% besitzen und die Niedrigmodulfasern eine relativ hohe mittlere Längung von mehr als 13% besitzen.

3. Reifen nach Anspruch 1 oder 2, dadurch gekennzeichnet, daß die Fasergarne im Bereich von 1000 bis 2000 Denier liegen.

4. Reifen nach Anspruch 1, 2 oder 3, dadurch gekennzeichnet, daß die Primärverzwirnung der Garne 20-40 Windungen pro cm und die abschließende oder letzte Verzwirnung 30-40 Windungen pro cm beträgt.

5. Reifen nach Anspruch 1 , 2, 3 oder 4, dadurch gekennzeichnet, daß die Niedrigmodulfasern Nylonfasern und die Hochmodulfasern Fasern aus aromatischen Polyamiden sind.

**Revendications**

1. Pneumatique à carcasse radiale pour motocyclette, comprenant une carcasse (6) d'au moins une nappe (6A, 6B), chaque nappe ayant des câblés de renforcement faisant un angle de 75 à 90° avec la direction circonférentielle du pneumatique, et une couche (7) de ceinture superposée à la carcasse (6) et comprenant plusieurs nappes (7A, 7B) de ceinture comportant chacune des câblés parallèles (9) formant un angle inférieur à 30° avec la direction circonférentielle du pneumatique, caractérisé en ce que les câblés (9) de ceinture ont un allongement moyen de 3 à 8 % sous une charge de 6,7 N (6,8 kg) et forment un ensemble retordu de fibres de module élevé ayant un module initial compris entre 40.10$^9$ et 50.10$^9$ Pa (4000 et 5 000 kg/mm$^2$) et de fibres de faible module ayant un module initial compris entre 2.10$^9$ et 4.10$^9$ Pa (200 et 400 kg/mm$^2$).

5

2. Pneumatique selon la revendication 1, caractérisé en ce que les fibres de module élevé ont un faible allongement moyen inférieur à 2 % et les fibres de faible module ont un allongement moyen relativement grand dépassant 13 %.

3. Pneumatique selon la revendication 1 ou 2, caractérisé en ce que les fils de fibres sont compris dans la plage de 1 000 à 2 000 deniers.

4. Pneumatique selon la revendication 1, 2 ou 3, caractérisé en ce que la torsion primaire des fils est comprise entre 20 et 40 tr/cm et la dernière torsion ou torsion finale est comprise entre 30 et 40 tr/cm.

5. Pneumatique selon la revendication 1, 2, 3 ou 4, caractérisé en ce que les fibres de faible module sont des fibres de "Nylon", et les fibres de module élevé sont des fibres de polyamide aromatique.

EP 0 360 588 B1

Fig.1

Fig.2